# EUROPÄISCHE PATENTSCHRIFT

(11) **EP 3 962 261 B1**
(45) Veröffentlichungstag und Bekanntmachung des Hinweises auf die Patenterteilung: **12.06.2024**
(21) Anmeldenummer: 20715296.8
(22) Anmeldetag: 24.03.2020
(51) Int. Cl.: A23C 1/12, A23C 7/04, A23C 9/16, A23C 21/00, A23C 1/14, A23C 1/04

(54) **VERFAHREN ZUR HERSTELLUNG EINES MILCH- ODER MOLKEPULVERS**
METHOD FOR PRODUCING A MILK OR WHEY POWDER
PROCÉDÉ DE FABRICATION D'UNE POUDRE DE LAIT OU DE PETIT-LAIT

(30) Priorität: 29.04.2019 DE 102019110995
(43) Veröffentlichungstag der Anmeldung: 09.03.2022
(73) Patentinhaber: GEA Mechanical Equipment GmbH, 59302 Oelde (DE)
(72) Erfinder: BECKER, Christian, 33818 Leopoldshöhe (DE); BUSSMANN, Daniel, 59302 Oelde (DE); BEICK, Lennart, 33604 Bielefeld (DE); VEER, Thomas, 49832 Beesten (DE)
(74) Vertreter: Specht, Peter
(86) Internationale Anmeldenummer: PCT/EP2020/058108
(87) Internationale Veröffentlichungsnummer: WO 2020/221515

(56) Entgegenhaltungen:
- US-A- 3 058 833
- US-A1- 2003 113 425
- Anonymos: "Separators from GEA Westfalia Separator for Milk Clarification and Bacteria Removal", , Dezember 2012 (2012-12), Seiten 1-40, XP055711645, Gefunden im Internet: URL:https://www.gea.com/en/binaries/BRO-DA -Bacteria-Removal-2012-12-EN_tcm11-27697.p df [gefunden am 2020-07-03]

## Beschreibung

Die vorliegende Erfindung betrifft ein Verfahren zur Herstellung eines Milch- oder Molkepulvers nach dem Oberbegriff des Anspruchs 1, sowie eine Verwendung eines Entkeim ungsseparators.

Aus der US 3 058 833 A ist die Verwendung von Zentrifugen zur Entkeimung von Flüssigkeiten und speziell auch von flüssigen Milchprodukten bekannt.

Aus der Veröffentlichung "Separators from GEA Westfalia Separators for Milk Clarification and Bacterial Removal", Dez. 2012, Seiten 1-40 ist die Verwendung einer Entkeimungszentrifuge zur Reduktion von Bakterien in verdickter Molke bekannt.

Schließlich offenbart die US 2003/113425 A1 dass der Gehalt an thermoresistenten Sporenbildnern in einem Milchpulverherstellungsverfahren über die Zeit ansteigen kann. Als Lösung wird eine Prozessunterbrechung und Reinigung vorgeschlagen.

Nach aktuellem Stand der Technik wird für die Herstellung von Pulver aus Vollmilch/Magermilch/Molke oder ähnlichen Produkten ein Verfahren eingesetzt, bei welchem das flüssige Grundprodukt, eine vorab pasteurisiert Milch oder Molke, die ggf. auf einen Proteingehalt, ein Protein/Fett Verhältnis o.ä. eingestellt wird, von dem ursprünglichen Trockenmassegehalt (im weiteren TS abgekürzt) (bei Magermilch ca. 8%TS) oder höher wie bei Vollmilch (ca. 12%TS) über Verdampfung der Flüssigkeit auf einen Feststoffgehalt von 40-65%TS konzentriert. Der Grundstoff kann vor der Konzentration über einen Entkeimungsseparator oder eine Entkeimungsfiltration im Keimgehalt reduziert werden um die Standzeit des Verdampfers zu verlängern. Das so gewonnene Konzentrat wird dann mittels eines Trockners zu einem Pulver mit 96%TS bei Magermilchpulver (SMP) und 97% bei Vollmilchpulver (WMP) getrocknet. Das gängige Verfahren variiert dabei leicht und kann um eine Vorkonzentration sowie eine Standardisierung des Proteingehalts ergänzt werden.

Bei den gängigen Verdampfungsprozessen steigt dabei der Gehalt an thermoduren Sporenbildnern mit der Dauer einer Produktion an. Besonders für Pulver mit dem Qualitätsanspruch Low Thermo Spore Pulver wird dann nach kurzer Zeit ein Punkt erreicht, bei dem die Produktion gestoppt und eine Reinigung gefahren werden muss um die erhöhten Ansprüche an die spätere Pulverqualität zu halten. Dies macht den Herstellungsprozess des Low Thermo Spore Pulvers wirtschaftlich schwierig, da Investitionen und Betriebsaufwände für genügend Anlagenkapazität für eine kontinuierliche Produktion oder kurze Produktionszeiten in Kauf genommen werden müssen.

Die dabei erzielten Standzeiten der Verdampfer variiert dabei von Prozess/und Produktqualitäten. Nachfolgend werden beispielhaft Prozesse für die Eindampfung von Milch genannt.

Ausgehend von der vorgenannten Vorbetrachtung ist es die Aufgabe der vorliegenden Erfindung, das Verfahren zur Herstellung eines pulverförmigen Milchproduktes verfahrenseffizienter zu gestalten und insbesondere die Abstände zwischen zwei Reinigungszyklen zur Reinigung der gesamten Anlage zu erhöhen.

Die vorliegende Erfindung löst diese Aufgabe durch ein Verfahren mit den Merkmalen des Anspruchs 1.

Ein erfindungsgemäßes Verfahren zur Herstellung eines Milch- oder Molkepulvers umfasst zumindest die folgenden Schritte:

### I. Bereitstellen von Milch, insbesondere Magermilch oder Vollmilch, oder von Molke

Sollte die Qualität der Milch oder Molke hinsichtlich der Keimzahl nicht hinreichend sein, so kann bereits während des Bereitstellens ein erstes Entkeimen in einem Entkeimungsseparator stattfinden.

### II. Eindicken der Milch oder Molke durch ein erstes Verdampfen und/oder zweites Verdampfen

Das Verdampfen kann in einer sogenannten Verdampferkolonne erfolgen. Dabei ändert sich neben dem TS-Gehalt (Trockensubstanzgehalt) der Milch oder Molke selbstverständlich auch deren Viskosität.

### III. Trocknen der eindickten Milch oder Molke zur Herstellung eines Milch- oder Molkepulvers,

Dieser Schritt kann in einem Sprühtrockner, einem Walzentrockner oder ähnlichen Vorrichtungen erfolgen.

Das erfindungsgemäße Verfahren zeichnet sich dadurch aus, dass nach dem ersten oder dem zweiten Verdampfen ein Entkeimen der Milch oder Molke durch einen zentrifugalen Entkeimungsseparator erfolgt. Insbesondere und besonders bevorzugt kann ein Entkeimen jeweils sowohl nach dem ersten und nach dem zweiten Verdampfen erfolgen.

Vorteilhafte Ausführungsvarianten sind Gegenstand der Unteransprüche.

Das Entkeimen kann nach dem ersten Verdampfen der Milch oder Molke durchgeführt werden. Ein Entkeimen an dieser Stelle der Herstellung eines pulverförmigen Milchproduktes verringert die Intensität oder Häufigkeit einer Reinigung der anschließenden Anlagenbauteile.

Das erste und/oder zweite Verdampfen kann in einer Verdampferkolonne durchgeführt werden.

Der Entkeimungsseparator kann unmittelbar im Ablauf der Verdampferkolonne nach dem ersten oder zweiten Verdampfen installiert sein. Insbesondere kann jeweils ein Entkeimen durch den Entkeimungsseparator sowohl nach dem ersten und nach dem zweiten Verdampfen erfolgen. Es können auch zwei Entkeimungsseparatoren eingesetzt werden.

Das Entkeimen kann effizient durch einen einzigen Entkeimungsseparator durchgeführt werden.

Für eine effizientere Entkeimung kann das Entkeimen durch zumindest zwei in Reihe geschaltete Entkeimungsseparatoren durchgeführt werden. Dadurch kann eine weitere Reduzierung der Anzahl von Keimen pro Gramm Milch oder Molke erreicht werden.

Das Entkeimen kann alternativ durch zumindest zwei Entkeimungsseparatoren durchgeführt werden, welche zueinander in paralleler Anordnung geschalten sind. Jeder der beiden Entkeimungsseparatoren, insbesondere in paralleler Anordnung, kann derart ausgebildet sein, dass er gesondert durch ein CIP-Verfahren reinigbar ist.

Das Entkeimen kann vorteilhaft bei einer Temperatur zwischen 45-65°C erfolgen. Dieser Temperaturbereich ist optimal zur Einstellung der Entkeimungsbedingungen.

Das Eindicken der Milch oder Molke durch ein erstes Verdampfen vor dem Entkeimen kann auf einen Feststoffgehalt von 16-26%, vorzugsweise zwischen 18-24%, erfolgen. In diesem Bereich arbeitet der Entkeimungsseparator besonders effizient.

Das Eindicken kann mittels eines Fallstromverdampfers oder Plattenverdampfers erfolgen.

Das Entkeimen von vorkonzentrierten Milchprodukten kann mittels eines Entkeimungsseparators mit einem vorgeschalteten Puffertank erfolgen.

Insbesondere kann im Zulauf eines jeden Entkeimungsseparators ein vorgeschalteter Puffertank zur Pufferung des Zulaufvolumens angeordnet sein.

Weiterhin kann im Ablauf eines jeden Entkeimungsseparators ein nachgeschalteter Puffertank zur Pufferung des Ablaufvolumens angeordnet sein.

Durch die Puffertanks ist der Entkeimungsseparator von der restlichen Anlage zur Herstellung eines pulverförmigen Milchproduktes hinsichtlich von Druckstößen entkoppelt.

Weiterhin wird die Verwendung eines Entkeimungsseparators zur Entkeimung einer verdickten Milch oder Molke mit einem Feststoffgehalt von zumindest 14 %, vorzugsweise mit einem Feststoffgehalt zwischen 16-26% offenbart (nicht erfindungsgemäß).

Der Entkeimungsseparator (nicht erfindungsgemäß) kann ein Tellerpaket mit Trenntellern aufweisen Nachfolgend werden mehrere Ausführungsvarianten der Erfindung anhand mehrerer Figuren im Detail näher erläutert. Es zeigen:
- Fig. 1: Prozessschema einer ersten Ausführungsvariante eines erfindungsgemäßen Verfahrens;
- Fig. 2: Prozessschema einer zweiten Ausführungsvariante eines erfindungsgemäßen Verfahrens;
- Fig. 3: Prozessschema einer dritten Ausführungsvariante eines erfindungsgemäßen Verfahrens; und

Fig. 4 Ausschnitt einer Anlage zur Herstellung von Milchpulver.

Die Ausgangsstoffe in den verschiedenen Ausführungsvarianten der vorliegenden Erfindung sind flüssige Milchprodukte. In den nachfolgend beschriebenen Ausführungsvarianten handelt es sich bei den flüssigen Milchprodukten um Magermilch 100, Vollmilch 101 oder Molke 102, insbesondere Süßmolke.

Bei der Herstellung von Milchpulver gilt es für die Ausgangsstoffe gewisse Vorbedingungen einzuhalten.

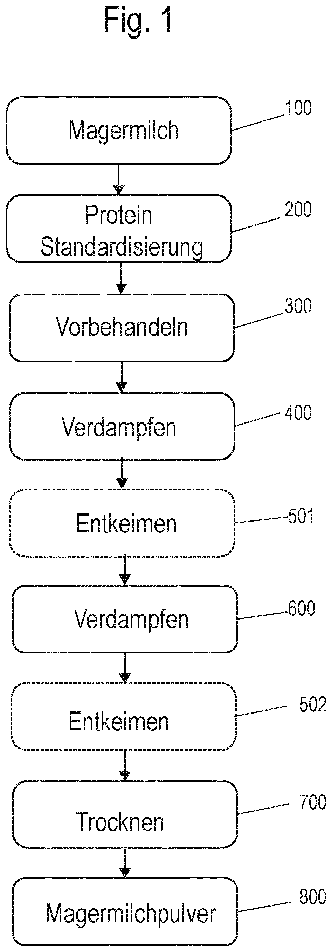

Fig. 1 zeigt die Verarbeitung des Ausgangsproduktes Magermilch 100, welche vorzugsweise in weniger als 48 h nach dem Melken zu Magermilchpulver weiterverarbeitet werden sollte. Die Lagerung zwischen dem Melken und der Verarbeitung nach dem erfindungsgemäßen Verfahren kann vorteilhaft bei maximal 5°C erfolgen. Die Milch kann vorbehandelt werden. Dies betrifft eine zentrifugale Entrahmung bzw. Klärung und/oder ein Pasteurisieren.

Die Anzahl an Mikroorganismen pro Gramm Milch sollte bevorzugt weniger als 50.000 kolonienbildende Einheiten (KBE), besonders bevorzugt weniger als 30.000 KBE, betragen. Ist die Anzahl an Mikroorganismen zu hoch, so kann die Milch bzw. Magermilch vor dem Einsatz für das erfindungsgemäße Verfahren entkeimt werden. Dies kann durch eine Mikrofiltration oder durch einen zentrifugalen Entkeimungs-Separator erfolgen. Vorzugsweise sollte die eingesetzte Milch eine Klasse A - Qualität aufweisen. Der Trockensubstanzgehalt von Magermilch 100 liegt ca. bei 9% (+/-1%).

In einem ersten optionalen Schritt 200 des erfindungsgemäßen Verfahrens kann eine Proteinstandardisierung 200 erfolgen. Dies kann beispielsweise durch Ultrafiltration von Magermilch erfolgen, wobei entweder das gewonnene Retentat oder das Permeat mit weiterer Magermilch vermischt wird, je nachdem ob eine Magermilch mit höherem oder geringerem Proteingehalt gewünscht wird. Diese Proteinstandardisierung dient u.a. zur Einstellung einer homogenen Milchqualität für den weiteren Verarbeitungsprozess.

In einem zweiten ebenfalls optionalen Schritt 300 kann Vorbehandeln z.B. eine Stabilisation von Magermilch erfolgen. In diesem Schritt erfolgt ein Erwärmen der Magermilch 100. Je nach Zusammensetzung der Magermilch kann ein Optimum einer Temperatur/Zeit-Kombination durch Versuche ermittelt werden. Beispielsweise hat sich eine Temperaturbehandlung im Bereich zwischen 100 bis 120°C über 1-4 min als günstig erwiesen. Anschließend kann die Milch auf eine Temperatur von mehr als 50°C, vorzugsweise 65-75°C abgekühlt und dem Verdampfer zugeführt werden. Dieser zweite Schritt dient der Verbesserung der Hitzestabilität der in der Magermilch enthaltenen Proteine, insbesondere des Caseins. Weiterhin können einige Keimarten abgetötet werden und es kann eine Voreinstellung der Temperatur für den anschließenden Verdampfer vorgenommen werden.

In einem dritten Schritt 400 erfolgt das Verdampfen bzw. Eindicken der Milch in einem Verdampfer. Dabei steigen die Viskosität und die Dichte der Magermilch an. Als Verdampfer können bevorzugt Umlauf- Fallstrom- oder Plattenverdampfer genutzt werden. Das Verdampfen erfolgt zweistufig, wobei der dritte Schritt 400 die erste Stufe des Verdampfens darstellt. Dabei wird eine konzentrierte Magermilch mit einer Trockenmasse von ca. 16-26% gewonnen. Bevorzugt können als Verdampfer sogenannte Verdampfer-Kolonnen genutzt werden.

Diese kann sodann in einem vierten Schritt 501 einem Entkeimungs-Separator zur zentrifugalen Entkeimung zugeführt werden. Der Entkeimungs-Separator oder die Entkeimungs-Separatoren sind als zentrifugale Tellerseparatoren ausgeführt, welche als Klärer betrieben werden. Verunreinigungen der Milch/Molke, wie unerwünschte Sporen, Keime und/oder Bakterien, werden sicher abgetrennt.

Die Milchtemperatur der konzentrierten Magermilch kann dabei mehr als 40°C, vorzugsweise 50 bis 60°C, betragen.

Die Trommel ist mit der maximal möglichen Klärfläche zu versehen. Die an den Entkeimungs-Separatoren eingesetzte Rückführleitung leitet eine gewisse Menge an Konzentrat (Schleppflüssigkeit) in die dem Separator zulaufende Magermilch zurück. Diese Schleppflüssigkeit besteht aus einer Zwischenphase zwischen der leichten, geklärten Milchphase und der schweren Feststoffphase. Durch die kontinuierliche Strömung der Schleppflüssigkeit im Tellerpaket wird der Entkeimungseffekt begünstigt.

Bevorzugt kann eine diskontinuierliche Entleerung des Trommelfeststoffraumes erfolgen dadurch können Verunreinigungen mitsamt den Bakterien aus der Trommel entfernt werden.

Der Entkeimungs-Separator ist für die Entkeimung von hochviskosen und dichteren Milchprodukten angepasst.

Gegenüber einem an sich bekannten Entkeimer für Milch wird die Zulaufleistung bei hochviskosen und dichteren Milchprodukten reduziert.

Es ist auch möglich und bevorzugt zwei oder mehr Entkeimungs-Separatoren parallel geschaltet nach dem Verdampfer anzuordnen.

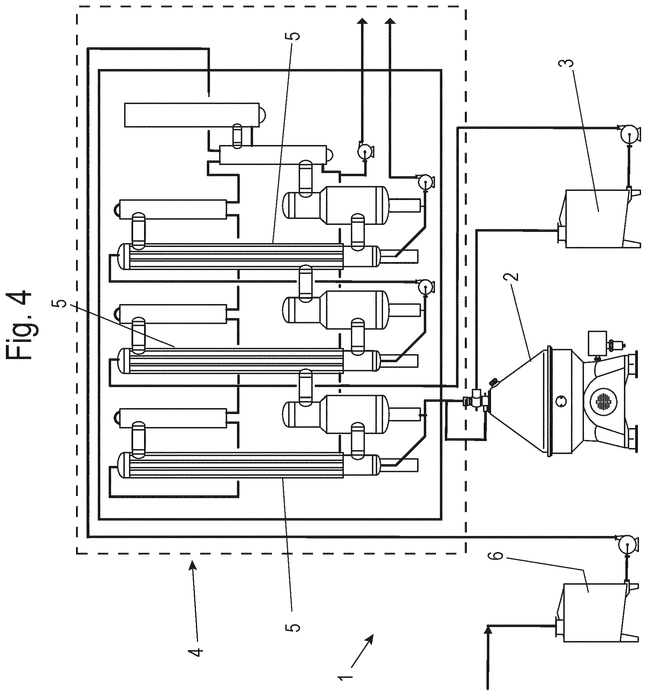

Fig. 4 zeigt ausschnittsweise eine Anlage 1 zur Herstellung von Milch- oder Molkepulver. Diese Anlage 1 ist lediglich ein Beispiel und kann insbesondere um weitere Verdampferkolonnen und/oder Entkeimungsseparatoren ergänzt werden.

Ein Entkeimungsseparator 2 wird dabei in einem Verdampfer 4 mit mehreren Verdampferkolonnen 5 angeordnet. Der Separator 2 kann vorzugsweise im Zulauf der nächsten Verdampferkolonne oder des Ablaufs der vorigen Verdampferkolonne 5 des Schrittes 400 zur weiteren Verarbeitung installiert sein. In dem Entkeimungsseparator 2 werden dann über Zentrifugalkräfte die vorhandenen Mikroorganismen, unter anderem die thermoduren Sporenbildner, abgetrennt.

Für eine effizientere Entkeimung kann optional ein weiterer Entkeimungsseparator in Reihe zu dem Entkeimungsseparator 2 geschaltet werden. Dadurch kann eine weitere Reduzierung der Anzahl von Keimen pro Gramm Milch oder Molke erreicht werden.

Um die Entkeimung über den gesamten Zeitraum zu gewährleisten kann optional ein zweiter Entkeimungsseparator installiert werden, welcher bei Bedarf alternativ zu dem ersten Separator in den Prozess eingebunden werden kann (parallel). Der erste Separator kann im Parallel-Betrieb in dieser Zeit über eine separat installierte CIP Versorgung gereinigt werden.

Um die Verdampfer, bzw. das Konzentrationsequipment ggf. von den Separatoren bei Druckschlägen und ähnlichem entkoppeln zu können, sowie den Fluss, soweit benötigt, konstant zu halten, können im Zulauf und/oder im Ablauf des Separators 2 oder der Separatoren ein Pufferbehälter 3 installiert werden, wie in Fig 4 dargestellt.

In Abwandlung von Fig. 4 können für jeden Separator jeweils ein Pufferbehälter im Zulauf und ein Behälter im Ablauf und/oder je ein Pufferbehälter im Zu- und Ablauf für beide Separatoren eingeplant werden.

Weiterhin kann ein Pufferbehälter 6 zulaufseitig an der Anordnung 4 aus mehreren Verdampferkolonnen 5 angeordnet sein.

Nach einem ersten Entkeimen 501 kann ein weiteres Verdampfen 600 vorgenommen werden. Hierfür kann die eingedickte Milch einer zweiten Verdampferkolonne zugeführt werden oder in den Verdampfer aus dem Schritt 400 rückgeführt werden. Durch das zweite Verdampfen kann eine eingedickte Magermilch mit einem Trockensubstanzgehalt von bis zu 50% erhalten werden.

Nach dem zweiten Verdampfen 600 kann sich abermals ein zweites Entkeimen 502 anschließen. Dieses zweite Entkeimen 502 kann analog zum erstes Entkeimen 501 erfolgen. Durch das zweite Entkeimen 502 kann die Keimzahl weiter gesenkt werden.

Es ist im Rahmen der vorliegenden Erfindung auch möglich zunächst das erste und das zweite Verdampfen durchzuführen und erst im Anschluss daran ein Entkeimen durchzuführen.

Schließlich wird in einem weiteren Schritt 700 ein Trocknen durchgeführt. Dieses Trocknen kann z.B. durch eine Sprühtrocknung erfolgen. Dabei kann Milch von einen Produktvorlaufbehälter oder direkt von dem Verdampfer oder dem Entkeimer einer Zerstäubungsvorrichtung zugeführt werden. Diese Zerstäubervorrichtung kann Teil eines Luftverteilers im Oberteil eines Trockenturms sein. Fein zerstäubte Tröpfchen treffen sodann im Trockenturm auf heiße Luft und die Verdampfung erfolgt unter gleichzeitiger Luftabkühlung. In den Unterteil des Trockenturmes fällt der größte Teil des getrockneten Milchpulvers und kann an dieser Stelle bereits durch ein entsprechendes Kühlsystem gekühlt werden.

Das durch das dargestellte Verfahren erzeugte Produkt kann Magermilchpulver sein. Die Restfeuchte dieses Magermilchpulver beträgt etwa 4% (+/- 0,2%). Bevorzugt handelt es sich um ein Magermilchpulver mit einer Keimzahl an thermophilen Sporen (113F bis 158F) von weniger als 100 cfu/g, besonders bevorzugt weniger als 50 cfu/g. Das vorgenannte Magermilchpulver kann als "Low Thermo Spore"-Pulver bezeichnet werden. Normales Magermilchpulver kann eine Keimzahl an thermophilen Sporen von bis zu 1000 cfu/g aufweisen. Typischerweise erfordert die Herstellung eines Magermilchpulvers mit der vorgenannten Keimzahl, beispielsweise nach einem Verfahrensablauf gemäß der US 20160113302 A1, eine Reinigung des Verdampfers in kurzen Abständen. Durch die Entkeimung im Verdampferprozess kann eine Anlage zur Herstellung von Milchpulver wesentlich länger im Produktionsmodus betrieben werden und der Reinigungsmodus braucht erst in längeren Abständen aktiviert werden.

Durch den Einsatz der Entkeimungsseparatoren in dem Verdampferprozess kann somit die Qualität der final erzeugten Endprodukte (z.B. Magermilchpulver), bei signifikant verlängerter Produktionszeit garantiert werden.

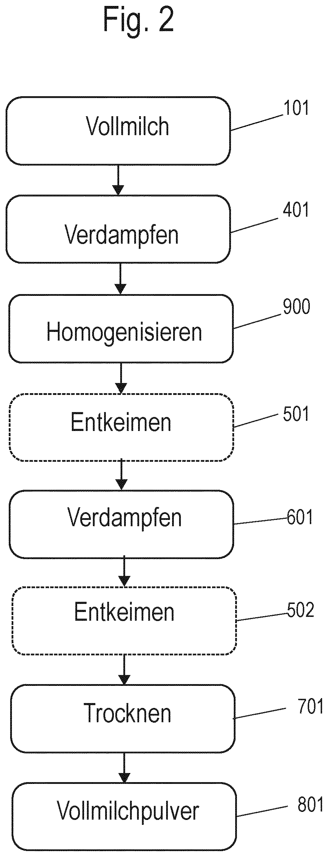

Fig. 2 zeigt die Verarbeitung des Ausgangsproduktes Vollmilch 101, welches ebenfalls vorzugsweise weniger als 48 h nach dem Melken zu Vollmilchpulver 801 weiterverarbeitet werden sollte. Die Lagerung zwischen dem Melken und der Verarbeitung nach dem erfindungsgemäßen Verfahren kann vorteilhaft bei maximal 5°C erfolgen. Die Milch kann vorbehandelt werden. Dies betrifft eine zentrifugale Entrahmung bzw. Klärung, eine Standardisierung des Fettgehalts durch Separation von Fett oder Zugabe von Magermilch und/oder ein Pasteurisieren.

Die Anzahl an Bakterien pro Gramm sollte bevorzugt weniger als 50.000, besonders bevorzugt weniger als 30.000, betragen. Ist die Anzahl an Bakterien zu hoch, so kann die Vollmilch vor dem Einsatz für das erfindungsgemäße Verfahren entkeimt werden. Dies kann durch eine Mikrofiltration oder durch einen zentrifugalen Entkeimungs-Separator erfolgen. Vorzugsweise sollte die eingesetzte Milch eine Klasse A - Qualität aufweisen. Der Trockensubstanzgehalt von Vollmilch liegt ca. bei 12% (+/-1%).

Die Vollmilch 101 kann zum Zwecke des Eindickens direkt einem Verdampfen 401 unterzogen werden. Dabei kann die Vollmilch 101 analog zur Behandlung von Magermilch 100 einer Verdampferkolonne zugeführt werden. Dabei wird eine konzentrierte Vollmilch mit einer Trockenmasse von bis zu 28% gewonnen.

Im Anschluss an das erste Verdampfen 401 kann eine Homogenisieren 900 der Milch erfolgen.

Im Anschluss an das Homogenisieren 900 kann ein Entkeimen 501 erfolgen. Das Entkeimen kann dabei analog zu der vorgenannten Ausführungsvariante erfolgen. So ist eine Entkeimung mit einem einzigen Entkeimungsseparator als Einzelentkeimung von Vorteil, allerdings kann auch eine Doppelentkeimung mit zwei in Reine geschalteten Entkeimungsseparatoren durchgeführt werden.

Nach einem ersten Entkeimen 501 kann ein zweites Verdampfen 601 vorgenommen werden. Hierfür kann die eingedickte und entkeimte Vollmilch einer zweiten Verdampferkolonne zugeführt werden oder in die Verdampferkolonne aus dem Schritt 401 rückgeführt werden. Durch das zweite Verdampfen kann eine eingedickte Vollmilch mit einem Trockensubstanzgehalt von bis zu 50% erreicht werden.

Optional kann nach diesem zweiten Verdampfen ein abermaliges Entkeimen 502 durchgeführt werden.

Schließlich kann die eindickte und entkeimte Vollmilch einer Trocknungseinheit, z.B. einem Sprühtrockner, zum Trocknen 701 zugeführt werden. Dabei wird die eingedickte Vollmilch in Vollmilchpulver umgewandelt. Die Restfeuchte bei Vollmilchpulver beträgt etwa 2,5% (+/- 0,2 %)

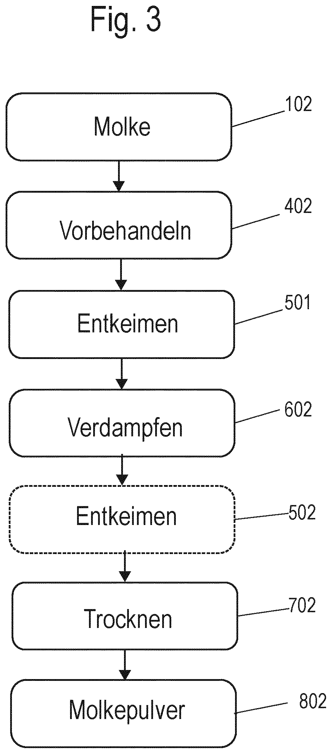

Fig. 3 zeigt die Verarbeitung von Süßmolke 102 zu Süßmolkepulver 802.

Im Fall von Süßmolke 102 sollte diese bevorzugt aus der Herstellung von Käse stammen, welche aus frischer Kuhmilch und ohne Zusatzstoffe hergestellt wurde. Eine kurze Lagerzeit von weniger als 1 h ist bevorzugt, sofern die Molke zwischen der Käseproduktion und der Weiterverarbeitung zu Molkepulver bei einer Temperatur von mehr als 10°C gelagert wird. Bei darunterliegenden Temperaturen beträgt die maximale Lagerzeit 10 h. Der Trockensubstanzgehalt von Süßmolke liegt ca. bei 6% (+/- 1 %).

In einem ersten Schritt kann die Süßmolke durch Verdampfen 402 eindickt werden. Dieses Eindicken kann analog zur Ausführungsvariante der Fig. 1 durchgeführt werden. Der Trockensubstanzgehalt der eingedickten Süßmolke beträgt bis zu 26 %.

Sodann erfolgt ein Entkeimen 501 in einem Entkeimungsseparator. Dieses Entkeimen kann als Einzelentkeimung oder Doppelentkeimung durchgeführt werden.

Sodann erfolgt ein weiteres Verdampfen 602, so dass die eingedickte Süßmolke einen Trockensubstanzgehalt von bis zu 50% aufweist.

Optional kann nach diesem zweiten Verdampfen ein abermaliges Entkeimen 502 durchgeführt werden.

Schließlich erfolgt ein Trocknen 702 der eingedickten Süßmolke zu einem Süßmolkepulver mit einer Restfeuchte von ca. 4% (+/- 0,2%) bezogen auf das Gewicht des Pulvers.

Bei den in den Fig. 1- 3 dargestellten Verfahren werden die Produktionslinien um min. einen Entkeimungsseparator, vorzugsweise zwei parallel oder in Reihe-geschaltete Entkeimungs-Separatoren ergänzt, die für die Entkeimung von hochviskosen und dichteren Milchprodukten konzipiert sind.

Die Entkeimung erfolgt dabei nach einem Schritt des Verdampfens. Bevorzugt kann einer oder mehrere Entkeimungsseparatoren nach einer Verdampferkolonne eines ersten Verdampfungsschrittes bzw. Eindickungsschrittes 400, 401, 402 erfolgen. So kann zumindest ein Entkeimungsseparator z.B. im Zulauf einer Verdampferkolonne eines zweiten Verdampfungsschrittes 600, 601, 602 oder im Ablauf der Verdampferkolonne des zweiten Verdampfungsschrittes 600, 601, 602 installiert sein.

Als besonders vorteilhaft wird dabei die Installation eines Entkeimungsseparators nach der Verdampferkolonne des ersten Verdampfungsschrittes 400, 401, 402 angesehen, bei welcher das Produkt mit einer Trockenmasse von ca. 16-26%, besser 18-24% TS aus dem Verdampfer in den Entkeimungsseparator gepumpt wird.

In dem Entkeimungsseparator werden dann über Zentrifugalkräfte die vorhandenen Mikroorganismen, unter anderem die thermoduren Sporenbildner abgetrennt.

Um eine weitere Reduzierung der Anzahl von Keimen pro Gramm Milch oder Molke zu erreichen, kann optional ein weiterer Entkeimungsseparator in Reihe zu dem Entkeimungsseparator 2 geschaltet werden.

Um die Entkeimung über den gesamten Zeitraum zu gewährleisten wird ein zweiter Entkeimungs-Separator installiert, welcher bei Bedarf alternativ zu dem 1. Separator (Parallelschaltung) in den Prozess eingebunden werden kann. Der 1. Separator kann im Fall einer Parallelschaltung in dieser Zeit über eine separat installierte CIP Versorgung gereinigt werden.

Um die Verdampfer, bzw. das Konzentrationsequipment ggf. von den Entkeimungsseparatoren für Druckschläge und ähnliches entkoppeln zu können sowie den Fluss, soweit benötigt konstant zu halten können im Zulauf sowie dem Ablauf der Separatoren Pufferbehälter 3 installiert werden. Hier können für jeden Separator jeweils ein Pufferbehälter im zu und ein Behälter im Ablauf sowie je ein Pufferbehälter im zu und Ablauf für beide Separatoren eingeplant werden.

### Bezugszeichenliste

- 100: Magermilch
- 101: Vollmilch
- 102: Molke
- 200: Protein Standardisierung
- 300: Vorbehandeln
- 400: Verdampfen
- 401: Verdampfen
- 402: Vorbehandeln
- 501: Entkeimen
- 502: Entkeimen
- 600: Verdampfen
- 601: Verdampfen
- 602: Verdampfen
- 700: Trocknen
- 701: Trocknen
- 702: Trocknen
- 800: Magermilchpulver
- 801: Vollmilchpulver
- 802: Molkepulver
- 900: Homogenisieren

- 1: Anlage
- 2: Entkeimungsseparator
- 3: Puffertank
- 4: Verdampfer
- 5: Verdampferkolonne
- 6: Puffertank

## Patentansprüche

1. Verfahren zur Herstellung eines Milch- oder Molkepulvers (800, 801, 802) wobei das Verfahren zumindest die folgenden Schritte umfasst:
I. Bereitstellen von Milch als Magermilch (800) oder Vollmilch (801) oder von Molke (802);
II. Eindicken der Milch oder Molke durch ein erstes Verdampfen (400, 401, 402) oder durch ein erstes Verdampfen (400, 401, 402) und ein zweites Verdampfen (600, 601, 602);
III. Trocknen (700, 701, 702) der eindickten Milch oder Molke unter Bereitstellung eines Milch- oder Molkepulvers (800, 801, 802),
**dadurch gekennzeichnet, dass** nach dem ersten und/oder zweiten Verdampfen (400, 401, 402, 600, 601, 602) ein Entkeimen (501, 502) der Milch oder Molke durch einen zentrifugalen Entkeimungsseparator (2) durchgeführt wird.

2. Verfahren nach Anspruch 1, **dadurch gekennzeichnet, dass** das Entkeimen (501, 502) nach dem ersten Verdampfen (400, 401, 402) der Milch oder Molke (800, 801, 802) durchgeführt wird.

3. Verfahren nach Anspruch 1 oder 2, **dadurch gekennzeichnet, dass** das erste und/oder zweite Verdampfen (400, 401, 402, 600, 601, 602) in einer Verdampferkolonne (5) durchgeführt wird.

4. Verfahren nach einem der vorhergehenden Ansprüche, **dadurch gekennzeichnet, dass** der Entkeimungsseparator (2) unmittelbar im Ablauf der Verdampferkolonne (5) des ersten und/oder zweiten Verdampfens (400, 401, 402, 600, 601, 602) installiert ist.

5. Verfahren nach einem der vorhergehenden Ansprüche, **dadurch gekennzeichnet, dass** das Entkeimen (501, 502) durch einen einzigen Entkeimungsseparator (2) durchgeführt wird.

6. Verfahren nach einem der vorhergehenden Ansprüche 1-4, **dadurch gekennzeichnet, dass** das Entkeimen (501, 502) durch zumindest zwei Entkeimungsseparatoren durchgeführt wird, welche zueinander zur weiteren Reduzierung der Anzahl der Keime in Reihe geschaltet sind.

7. Verfahren nach einem der vorhergehenden Ansprüche 1-4, **dadurch gekennzeichnet, dass** das Entkeimen (501, 502) durch zumindest zwei Entkeimungsseparatoren durchgeführt wird, welche zueinander in paralleler Anordnung geschalten sind.

8. Verfahren nach einem der vorhergehenden Ansprüche 6 oder 7, **dadurch gekennzeichnet, dass** jeder der beiden Entkeimungsseparatoren derart ausgebildet ist, dass er gesondert durch ein CIP-Verfahren reinigbar ist.

9. Verfahren nach einem der vorhergehenden Ansprüche, **dadurch gekennzeichnet, dass** das Entkeimen (501, 502) bei einer Temperatur zwischen 45-65°C erfolgt.

10. Verfahren nach einem der vorhergehenden Ansprüche, **dadurch gekennzeichnet, dass** das Eindicken der Milch oder Molke durch das erste Verdampfen (400, 401, 402) auf einen Feststoffgehalt von 16-26%, vorzugsweise zwischen 18-24%, erfolgt.

11. Verfahren nach einem der vorhergehenden Ansprüche, **dadurch gekennzeichnet, dass** das Eindicken mittels eines Fallstromverdampfers erfolgt.

12. Verfahren nach einem der vorhergehenden Ansprüche, **dadurch gekennzeichnet, dass** das Entkeimen (501, 502) von vorkonzentrierten Milchprodukten mittels eines Entkeimungsseparators mit einem vorgeschaltetem Puffertank erfolgt.

13. Verfahren nach einem der vorhergehenden Ansprüche, **dadurch gekennzeichnet, dass** im Zulauf eines jeden Entkeimungsseparators ein vorgeschalteter Puffertank (6) zur Pufferung des Zulaufvolumens angeordnet ist.

14. Verfahren nach einem der vorhergehenden Ansprüche, **dadurch gekennzeichnet, dass** im Ablauf eines jeden Entkeimungsseparators (2) ein nachgeschalteter Puffertank (3) zur Pufferung des Ablaufvolumens angeordnet ist.

## Claims

1. Method for producing a milk or whey powder (800, 801, 802), wherein the method comprises at least the following steps of:
I. providing milk as skimmed milk (800) or whole milk (801) or whey (802);
II. thickening the milk or whey by a first evaporation (400, 401, 402) or by a first evaporation (400, 401, 402) and a second evaporation (600, 601, 602);
III. drying (700, 701, 702) the thickened milk or whey while providing a milk or whey powder (800, 801, 802),
**characterized in that** after the first and/or second evaporation (400, 401, 402, 600, 601, 602), the milk or whey is sterilized (501, 502) by a centrifugal sterilization separator (2).

2. Method according to claim 1, **characterized in that** the sterilization (501, 502) is carried out after the first evaporation (400, 401, 402) of the milk or whey (800, 801, 802).

3. Method according to claim 1 or 2, **characterized in that** the first and/or second evaporation (400, 401, 402, 600, 601, 602) is carried out in an evaporation column (5).

4. Method according to one of the preceding claims, **characterized in that** the sterilization separator (2) is installed directly in the outlet of the evaporation column (5) of the first and/or second evaporation (400, 401, 402, 600, 601, 602).

5. Method according to one of the preceding claims, **characterized in that** the sterilization (501, 502) is carried out by a single sterilization separator (2).

6. Method according to one of the preceding claims 1-4, **characterized in that** the sterilization (501, 502) is carried out by at least two sterilization separators which are connected in series to each other to further reduce the number of germs.

7. Method according to one of the preceding claims 1-4, **characterized in that** the sterilization (501, 502) is carried out by at least two sterilization separators which are connected in parallel to one another.

8. Method according to one of the preceding claims 6 or 7, **characterized in that** each of the two sterilization separators is designed in such a way that it can be cleaned separately by a CIP process.

9. Method according to one of the preceding claims, **characterized in that** the sterilization (501, 502) takes place at a temperature between 45-65°C.

10. Method according to one of the preceding claims, **characterized in that** the thickening of the milk or whey is carried out by the first evaporation (400, 401, 402) to a solids content of 16-26%, preferably between 18-24%.

11. Method according to one of the preceding claims, **characterized in that** the thickening is carried out by means of a falling-film evaporator.

12. Method according to one of the preceding claims, **characterized in that** the sterilization (501, 502) of pre-concentrated milk products is carried out by means of a sterilization separator with an upstream buffer tank.

13. Method according to one of the preceding claims, **characterized in that** an upstream buffer tank (6) for buffering the feed volume is arranged in the feed of each sterilization separator.

14. Method according to one of the preceding claims, **characterized in that** a downstream buffer tank (3) for buffering the outlet volume is arranged in the outlet of each sterilization separator (2).

## Revendications

1. Procédé pour la fabrication d'une poudre de lait ou de petit-lait (800, 801, 802), lequel procédé comprend au moins les étapes suivantes :
I. apport de lait sous forme de lait écrémé (800) ou de lait entier (801) ou de petit-lait (802) ;
II. concentration du lait ou du petit-lait par une première évaporation (400, 401, 402) ou par une première évaporation (400, 401, 402) et une deuxième évaporation (600, 601, 602) ;
III. séchage (700, 701, 702) du lait ou du petit-lait concentré avec préparation d'une poudre de lait ou de petit-lait (800, 801, 802),
**caractérisé en ce que**, après la première et/ou la deuxième évaporation (400, 401, 402, 600, 601, 602) une bactofugation (501, 502) du lait ou du petit-lait est réalisée dans un séparateur centrifuge de bactofugation (2).

2. Procédé selon la revendication 1, **caractérisé en ce que** la bactofugation (501, 502) est effectuée après la première évaporation (400, 401, 402) du lait ou du petit-lait (800, 801, 802).

3. Procédé selon la revendication 1 ou 2, **caractérisé en ce que** la première et/ou deuxième évaporation (400, 401, 402, 600, 601, 602) est réalisée dans une colonne d'évaporation (5).

4. Procédé selon l'une des revendications précédentes, **caractérisé en ce que** le séparateur de bactofugation (2) est installé immédiatement à la sortie de la colonne d'évaporation (5) de la première et/ou deuxième évaporation (400, 401, 402, 600, 601, 602).

5. Procédé selon l'une des revendications précédentes, **caractérisé en ce que** la bactofugation (501, 502) est effectuée par un seul séparateur de bactofugation (2).

6. Procédé selon l'une des revendications 1 à 4, **caractérisé en ce que** la bactofugation (501, 502) est effectuée par au moins deux séparateurs de bactofugation qui sont montés en série les uns avec les autres afin de réduire encore le nombre de germes.

7. Procédé selon l'une des revendications 1-4, **caractérisé en ce que** la bactofugation (501, 502) est effectuée par au moins deux séparateurs de bactofugation qui sont montés en parallèle les uns avec les autres.

8. Procédé selon l'une des revendications 6 ou 7, **caractérisé en ce que** chacun des deux séparateurs de bactofugation est conformé de façon à pouvoir être nettoyé séparément par un procédé de nettoyage en place.

9. Procédé selon l'une des revendications précédentes, **caractérisé en ce que** la bactofugation (501, 502) est effectuée à une température comprise entre 45 °C et 65 °C.

10. Procédé selon l'une des revendications précédentes, **caractérisé en ce que** la concentration du lait ou du petit-lait par la première évaporation (400, 401, 402) amène à une teneur en matières grasses de 16 à 26 %, de préférence entre 18 et 24 %.

11. Procédé selon l'une des revendications précédentes, **caractérisé en ce que** la concentration est réalisée au moyen d'un évaporateur à ruissellement.

12. Procédé selon l'une des revendications précédentes, **caractérisé en ce que** la bactofugation (501, 502) de produits laitiers préalablement concentrés est effectuée au moyen d'un séparateur de bactofugation avec un réservoir tampon monté en amont.

13. Procédé selon l'une des revendications précédentes, **caractérisé en ce qu'**un réservoir tampon d'amont (6) est disposé dans l'alimentation de chaque séparateur de bactofugation pour former un tampon avec le volume d'alimentation.

14. Procédé selon l'une des revendications précédentes, **caractérisé en ce qu'**un réservoir tampon d'aval (3) est disposé à la sortie de chaque séparateur de bactofugation (2) pour former un tampon avec le volume de sortie.
